# EUROPEAN PATENT APPLICATION

(11) **EP 2 063 296 A2**
(43) Date of publication of application: **27.05.2009**
(21) Application number: 08168686.7
(22) Date of filing: 07.11.2008
(51) Int. Cl.: G02B 6/00, F21V 8/00

(54) **Integrated backlight illumination assembly**

(30) Priority: 08.11.2007 US 983279
(71) Applicant: SKC Haas Display Films Co., Ltd., Chungcheongnam-do 330-836 (KR)
(72) Inventor: Hong, Qi, Rochester, NY 14613 (US); Aylward, Peter T., Hilton, NY 14468 (US); Bourdelais, Robert P., Pittsford, NY 14534 (US)
(74) Representative: Buckley, Guy Julian

(57) **Abstract**

The present invention provides an integrated backlight illumination assembly for an LCD display comprising, a substrate for providing structural and functional support to the assembly, a bottom reflector provided on the substrate and a plurality of solid state light sources provided in an opening of the bottom reflector for providing a point light source. Further, the invention provides a plurality of light films with a thickness between 10 microns to 3mm and having light redirecting areas provided between the plurality of solid state light sources for redirecting and spreading the point light source to a uniform plane of light and a top diffuser for diffusing the uniform plane of light, and wherein the plurality of light films has a thickness between .1 mm to 1.0 mm and a bending stiffness between 50 to 1200 millinewtons.

## Description

### FIELD OF THE INVENTION

This invention relates to the art of backlight apparatus for a display and a liquid crystal display employing such apparatus. In particular, the present invention relates to a Liquid Crystal Display (LCD) backlight with solid-state light sources.

### BACKGROUND OF THE INVENTION

While liquid crystal displays offer a compact, lightweight alternative to cathode ray tube (CRT) monitors, there are many applications for which the image quality of LCD displays are not yet satisfactory, particularly as the relative size of these devices increases. Larger LCD panels, such as those used in laptop computer or larger displays, are transmissive, and thus require a backlight. This type of light-providing surface, positioned behind the LCD panel, directs light outwards and towards the LCD.

Conventional approaches for backlighting use various arrangements of cold cathode fluorescent (CCFL) light sources with light guide plates, one or more types of enhancement films, polarization films, reflective surfaces, and other light conditioning elements. Conventional flat panel backlight solutions using side-mounted CCFLs are less and less desirable as display size increases and, particularly as display area grows, can be susceptible to warping in manufacture or due to heat. Light-guiding backlight techniques that are conventionally employed for smaller devices are increasingly hampered by low brightness or luminance levels and by problems related to poor uniformity as the display size increases, such as would be needed for digital TV, for example. Existing backlight apparatus for LCD displays and other display and illumination applications, often using banks of CCFLs lined up in parallel, can be relatively inefficient. These display solutions can also be relatively thick, due to the need to house the CCFL and its supporting films and surfaces behind the LC panel. The CCFL light source itself presents an environmental problem for disposal, since these devices contain some amount of mercury. To compensate for uniformity and brightness problems with conventional CCFL-based backlights, a number of supporting films are conventionally interposed between the backlight and the display, or disposed following the display, such as relatively high-cost reflective polarization films. As is well known, the spectral characteristics of CCFLs are relatively poor when compared to other types of light sources.

Faced with the inherent difficulties and limitations to CCFL used in backlighting applications, researchers have been motivated to pursue alternative backlighting approaches. A number of solutions have been proposed utilizing Light-Emitting Diodes (LEDs). Recent advances in LED brightness, color output, and overall performance, with continuing reduction in cost, make LEDs, lasers, and solid-state light sources in general particularly attractive. However, because LEDs and lasers act as point light sources, appropriate solutions are needed for redirecting and spreading this light to provide the uniform plane of light that is needed for backlighting and to provide the necessary color uniformity.

One approach for providing backlight illumination using LEDs is using an array arrangement, such as that described in the paper by M. Zeiler, J. Huttner, L. Plotz, and H. Ott entitled "Late-News Paper: Optimization Parameters for LED Backlighting Solutions" SID 2006 Digest pp. 1524-1527. Using this type of solution, an array of LED clusters using Red (R), Green (G), and Blue (B) LEDs is deployed as a backlight for an LCD displays. Two types of clusters are described: RGGB and RGB. However, except for specialized uses such as for some types of instrument panels and for very high-end monitors and TV panels, array arrangements do not appear promising, due to problems of poor color and brightness uniformity, high parts count, high heat, and dimensional requirements.

Light guides have been employed for spreading light from a point source in order to form a line of light. For example, U. S. Patent No.5,499,112 entitled "Light Guide, Illuminating Device Having the Light Guide, and Image Reading Device and Information Processing Apparatus Having the Illuminating Device" to Kawai et al. discloses redirecting light from one or more LEDs to a line in a scanning apparatus, using a single light guide having extraction features distributed along its length

There has been considerable work directed to the goal of providing LED backlighting. However, although there have been a number of solutions proposed, there are significant drawbacks inherent to each type of solution, particularly when faced with the problem of backlighting for a display panel of standard laptop dimensions or larger.

In addition to these drawbacks, conventional solutions generally fail to address important challenges for high-quality color imaging, required for widespread commercialization and acceptance of LC displays. Color gamut is one important consideration that is of particular interest to display designers. Conventional CCFLs provide a measure of color quality that is acceptable for many applications, offering up to about 70% of the NTSC color gamut. Although this may be acceptable for laptop and computer monitor applications, it falls short of what is needed for full-color TV displays.

In contrast to CCFL light sources, LEDs and other solid-state light sources, because of their relatively high degree of spectral purity, are inherently capable of providing 100% or more of the NTSC color gamut. In order to provide this enlarged color gamut, three or more different-colored LEDs or other solid-state sources are needed. To support such an expanded color gamut when using LEDs and other solid-state light sources, a high level of color mixing is required from the backlighting apparatus. As is well known to those skilled in the imaging display art, achieving a good level of color uniformity when using solid-state light sources, such as Red (R), Green (G), and Blue (B) LEDs, is particularly challenging. Conventional backlighting solutions that employ larger-area light guides, such as those described above, would provide correspondingly inferior color mixing. Other challenges related to backlighting for larger scale displays include the need for low-cost assembly, light efficiency, uniformity, and compact size. Conventional LED backlighting solutions fall short of what is needed to meet these additional requirements. Additionally, it would be particularly useful to eliminate the need for thick bulky light guide plates or thick lightbars, which may be possible where uniformity and brightness are sufficiently improved.

Thus, it can be seen that there is a need for an LED backlight solution that can be inexpensively manufactured, has minimal thickness, and provides color mixing with good uniformity, high brightness, and high levels of efficiency.

### SUMMARY OF THE INVENTION

In one embodiment the present invention provides an integrated backlight illumination assembly for an LCD display comprising: a substrate for providing structural and functional support to the assembly; a bottom reflector provided on the substrate; a plurality of solid state light sources provided in an opening of the bottom reflector for providing a point light source; a plurality of light films having light redirecting areas provided between the plurality of solid state light sources for redirecting and spreading the point light source to a uniform plane of light; a top diffuser for diffusing the uniform plane of light; and wherein the plurality of light films has a thickness between .1 mm to 1.0 mm and a bending stiffness between 50 to 1200 millinewtons.

In another embodiment the invention provides an integrated backlight illumination assembly for an LCD display comprising: a substrate for providing structural and functional support to the assembly; a bottom reflector provided on the substrate; a plurality of multi-colored solid state light sources provided in an opening of the bottom reflector for providing a point light source; a plurality of light films having light redirecting areas provided between the plurality of solid state light sources for redirecting and spreading the point light source to a uniform plane of light; a plurality of color mixing sections provided in the light redirecting areas for providing improved color uniformity from the multi-colored solid state light sources; and a top diffuser for diffusing the uniform plane of light; and wherein the plurality of light films has a thickness between .1 mm to 1.0 mm and a bending stiffness between 50 to 1200 millinewtons.

### BRIEF DESCRIPTION OF THE DRAWINGS

Figure 1 illustrates an integrated backlight illumination assembly of the present invention;
Figure 2 illustrates a topical view of a backlight illumination area with light film having light redirecting areas;
Figures 3A and 3B illustrate a multi-region light redirecting film with multiple regions for light redirecting and channeled light input;
Figures 4A and 4B illustrate light film with multiple regions for light redirecting and channeled light input;
Figures 5A and 5B illustrate a light film with a color mixing section for RGB LED or other multi-colored solid state light source;
Figures 6A and 6B illustrate a light film with multiple regions for light redirection with color mixing sections;
Figure 7 illustrates a cross-sectional view of a backlight embodiment without the thin reflector strip as shown in previous Figures;
Figure 8 illustrates a cross-sectional view of a portion of a light film with side emitting LED light source that is positioned in the light film;
Figures 9A and 9B illustrate a front view and a top view, respectively, of the light input surface;
Figure 9C illustrates a top view of an element of a light redirecting array with tapered light mix section and light input surface with lenticular lens and an associated solid state light source;
Figure 9D illustrates a top view of several configurations of LED light sources and their associated light redirecting areas as well as the light input surface with an optical feature that are inserted in the thickness plane of the light film;
Figures 10A and 10B illustrate a front view and a top view, respectively, of the light source and light entry surface of a light film with solid state light source and lenticular high powered lenslet;
Figures 11A, B and C illustrate a front view, a side view and a top view, respectively, of an LED light source wherein the light emitting surface of the lens has a shaped optical structure;
Figures 12A, B and C illustrate a front view, a side view and a top view, respectively, of an LED light source wherein the light emitting surface of the lens has a shaped optical structure;
Figure 13A illustrates a cross sectional view of light redirecting area with a solid state light source;
Figure 13B illustrates a perspective view indicating that typically the thicker the light redirecting area is in relationship to the thickness of the light source, the better the coupling efficiency.
Figure 13C illustrates a graph showing the importance of the need for close positioning of the light source surface to the light entry surface of the light redirecting area;
Figure 14A illustrates a light redirecting area within a light film in which the top ends are beveled or chamfered edge to aid in the spread of light to help mask or hide the solid state light;
Figure 14B illustrates a cross sectional view of a light film where the LED is positioned under a recessed area of the light redirecting area; and
Figure 14C illustrates a cross section view of another embodiment wherein pockets or recesses have been formed in the light film from the bottom leaving a portion of the film that bridges the light source.

### DETAILED DESCRIPTION OF THE INVENTION

The present invention provides an integrated backlight illumination assembly that in some embodiments provide high level of color mixing and light uniformity needed to take advantage of solid-state light sources and in other embodiments are designed for white light illumination. In addition, the present invention significantly reduces the thickness of light guide plates used to spread light over the viewing surface of a display. It is a feature of the present invention to provide a backlight that utilizes a light film with spreading areas to provide uniform illumination. It is an advantage of the present invention to employ solid-state light sources to provide area backlighting for a display. The apparatus of the present invention is scalable and is particularly adaptable to larger sized LC panels. For example, the present invention provides a backlight apparatus that is well-suited to display applications, particularly for LC display panels, such as those used for LCD TV, medical diagnostics displays, imaging displays, and military displays, for example. In addition, the backlight apparatus of the present invention can be used for other illumination applications where solid-state lighting is advantageous.

### Solid State Lighting

Solid state lighting (SSL) refers to a type of lighting that utilizes light-emitting diodes (LEDs), organic light-emitting diodes (OLED), or polymer light-emitting diodes as sources of illumination rather than electrical filaments or gas. The term "solid state" refers to the fact that light in an LED is emitted from a solid object (e.g., a block of semiconductor) rather than from a vacuum or gas tube, as is the case in traditional incandescent light bulbs and fluorescent lamps. Unlike traditional lighting, however, SSL creates visible light with virtually no heat or parasitic energy dissipation. In addition, its solid-state nature provides for greater resistance to shock, vibration, and wear, thereby increasing its lifespan significantly.

### Advantages of Solid State Lighting

Energy Efficiency: LEDs have the potential to achieve 90%+ conversion efficiencies as a light source compared to under 50% for conventional sources (a common household light bulb is approximately 9% efficient). Because they are able to convert electricity directly into light, LEDs offer the promise of producing more light than heat from the energy supplied. This has huge implications for energy savings on a global scale in the future. Already, white LEDs are more efficient (measured in lumens/watt - Im/W) than incandescent sources. Today in applications where color is required, traffic signals or corporate signage for example, SSL is showing substantial reductions in energy consumption as all of the light produced is used, not wasted.
Long Life: The second advantage of LEDs that is revolutionizing the lighting industry is the extremely long life that can be achieved. There are two parts to this story.
   The first part is referred to as the "useful life", which is application specific. Common understanding is that a lamp lasts a certain amount of time and then goes out. Over the life of the lamp, the light output decreases and eventually the lamp comes to the "end" of its life. LEDs slowly decrease in light output over time as well, however, they never actually reach an "end" to their life in practical terms. What is important to consider is how long the LEDs will provide enough light to perform their duty, in other words: what is their useful life? For some applications this may be in excess of 100,000 hours where the light level is not critical. For others, it may be 50,000 hours, still approximately 4x better than a common fluorescent and 20x better than a household incandescent lamp. The second part of the story is that there is no practical end to the life of LEDs. This has important implications for decorative architectural applications and corporate imaging programs. While a burned out lamp can have a damaging impact on aesthetics, the gradual dimming that will occur beyond the useful life of an LED-based system will not have the dramatic negative effect and will not require immediate maintenance.
Robustness: There is no glass to get broken and no filament to break. LED lighting systems are inherently resistant to vibration problems and can be designed to withstand almost any extreme environment more easily than traditional lighting.
Low Temperature Performance: While there are lamps available that are resistant to low temperatures (metal halide, HPS), others, in particular fluorescent, do not perform well in cold weather. LEDs actually operate more efficiently in colder environments than at room temperature.
Digital Control: As the world goes digital it becomes increasingly important that lighting become integrated into that world. SSL is already a digital system that can be interfaced with other systems or precisely controlled to achieve maximum performance.
Color Saturation and Spectrum: It is possible to program an RGB array to produce almost any color and because light is not being filtered or absorbed the result is a deeper saturation of the color. This also applies to individual LED colors such as red which is produced directly and not by filtering out all of the blue, green, and yellow present in the light source. In addition an RGB source may also be used with a white light LED light source.
Optical Control: The size of an LED is very small and the light rays it produces are emitted in a very narrow beam. This means that optical systems can be designed to control the light with extremely high efficiency, resulting in less light being required to perform a certain function, which in turn increases the energy efficiency of the system. Low Voltage Operation: Current SSL systems generally operate on low voltage DC power, making them very safe to install and operate.

### Light Redirecting Features

The light films has a pattern of discrete individual optical redirecting features of well defined shape for refracting the incident light distribution such that the distribution of light exiting the films is in a direction more normal to the viewing side of the films. These individual optical redirecting features may be formed preferably between the TIR surfaces (view side and bottom or non-view side), and may include one or more sloping surfaces for refracting the incident light toward a direction normal to the exit surface. These sloping surfaces may for example include a combination of planar and curved surfaces that redirect the light within a desired viewing angle. Also, the curvature of the surfaces, or the ratio of the curved area to the planar area of the individual optical elements as well as the perimeter shapes of the curved and planar surfaces may be varied to tailor the light output distribution of the films, to customize the viewing angle of the display device used in conjunction with the films. In addition, the curvature of the surfaces, or the ratio of the curved area to the planar area of the individual optical elements may be varied to optimize the light uniformity that is directed upwards towards the view side of the backlight or display. Also the size and population of the individual optical redirecting features, as well as the curvature of the surfaces of the individual optical redirecting features may be chosen to produce a more or less diffuse output or to randomize the input light distribution from the light source to produce a softer more diffuse light output distribution while maintaining the output distribution within a specified angular region about the direction normal to the films.

The individual optical elements that form the redirecting features within the light redirecting area of a light film may be randomized in such a way as to eliminate any interference with the pixel spacing of a liquid crystal display. This randomization can include the size, shape, position, depth, orientation, angle or density of the optical elements. This eliminates the need for diffuser layers to defeat moiré and similar effects. Also, at least some of the individual redirecting features may be arranged in groupings across the film, with at least some of the optical elements in each of the groupings having a different size or shape characteristic that collectively produce an average size or shape characteristic for each of the groupings that varies across the films to obtain average characteristic values beyond machining tolerances for any single redirecting feature and to defeat moiré and interference effects with the pixel spacing of a liquid crystal display. In addition, at least some of the individual redirecting features may be oriented at different angles relative to each other for customizing the ability of the films to reorient/redirect light along two different axes.

Additionally, the density of the redirecting features may also vary as a function of their distance form the light source. In general there are fewer features near the light source and more features further from the light source. The relative size of the feature may also vary as a function of the distance from the light source. Smaller features are typically closer to the light source and larger ones further away. This is done to help provide more uniform illumination of the backlight or display.

The angles that the light redirecting surfaces of the individual optical elements make with the light exit surface of the films may also be varied across the display area of a liquid crystal display to tailor the light redirecting function of the films to a light input distribution that is non-uniform across the surface of the light source. The individual optical elements of the light redirecting areas may vary in the size, shape, position and/or orientation of the individual optical elements of the light redirecting films may vary to account for variations in the distribution of light emitted by a light source. The properties and pattern of the optical elements of light redirecting features may also be customized to optimize the light redirecting films for different types of light sources which emit different light distributions, for example, one pattern for single bulb laptops, another pattern for double bulb flat panel displays, and so on.

Further, light redirecting film systems are provided in which the orientation, size, position and/or shape of the individual redirecting features of the light redirecting films are tailored to the light output distribution of a backlight or other light source to reorient or redirect more of the incident light from the backlight within a desired viewing angle. Also, the backlight may include individual redirecting features deformities that collimate light along one axis and the light redirecting films may include individual optical elements that collimate light along another axis perpendicular to the one axis.

### Light Extraction Features

There are a number of embodiments for light redirecting features. The basic function of light redirecting features is to redirect light that is otherwise being channeled by TIR and thereby cause light to be emitted from linear light channel or light guide plate (LGP). This can be done in a number of ways, including the following:
(i) Holes or shaped depressions may be formed, molded, pressed and or drilled into the non-view side surface of the film. The redirecting features may be 10 to 500 microns in depth and is somewhat dependant of the thickness of the film. The use of such features may be used with further extraction aid on the top surface of the redirecting film although it should be noted that the light redirecting features may be designed to work in combination with a view side surface feature or optical film. Once the light has been redirected towards the view side surface, other optical films such as diffusers (volume and or surface, asymmetric, holographic, scattering particles, air voids .etc may be used). Embodiments within this patent may also be used in combination with at least one film that provides a function selected from the group consisting of diffusion, light collimation, brightness enhancement, light spreading, light bending, forward scattering, back scattering, side scattering polarization, polarization recycling, light modulation, light filtering, stiffening, dimensional stability, layer separation.
(ii) Treatment of the light emission portion of the light film may be done to aid in the extraction of light from the light film. Types of surface treatment include forming light extraction structures along an edge of linear light channel or view surface of a LGP, along the surface that faces the display. For example, one approach is to form an array of prism structures along the length direction. Microstructures used could be an array of prisms, pyramids, hemispheres, or other well-defined geometries to frustrate TIR. These can include top or bottom emitting structures, inverted, formed as individual elements, or aligned in columns. Microstructures could be molded or otherwise formed of varying shapes and sizes, as a function of the distance from the light source.
(iii) Application of a light-extracting film component. One possible light extraction feature that may be used on the light emission portion of the light film is described in commonly assigned U.S. Patent Application No. 20050270798 entitled "Brightness Enhancement Film Using A Linear Arrangement Of Light Concentrators" by Lee et al., incorporated herein by reference. Optionally, the light emissive surface of a portion of the light films may be featured to form light extraction structures thereon. A portion of light film can be molded such as using a roller or otherwise treated to form light-redirecting microstructures.
(iv) Printed dots. A pattern of reflective dots, printed along a base portion of light film opposite its light emission surface, can be used to redirect light upwards towards the view side. Printed dots can be of varying density and size, helping to provide a more uniform light output.

Combinations of these types of treatments listed in (i) through (iv) above could also be used. Light extraction features could be individual elements. In order to provide uniform light emission along the length of light film, the size and density of the light extraction area may vary as a function of the distance from solid-state light source. For example, where there are LED light sources at each end of featured portion of the light film, light redirecting features could be distributed with higher density near the center than toward the ends. Alternately, the distribution density of light extraction elements could be substantially continuous in one direction. Light redirecting features may be molded into, embossed, pressed, adhered, or laminated to the side of the light film that faces the display plane or other light output side.

### Film Materials

Typically, it is desirable to have a highly transparent material that is free of defects and is substantially non-color changing based on age and or environmental exposure. Additives may be included to minimize any physical, chemical or optical change in the film over a wide range of conditions. The film should have a % transmission of greater than 85% and preferably greater than 90%. Another desirable attribute of the film is to provide good dimensional stability over the specified range of temperature and humidity for a variety of display applications. Useful material may include but are not limited to polycarbonate, PMMA, impacted modified PMMAs, light or chemically cured acrylates, polyesters, cyclic olefins, polyestercarbonates, polysulfones and copolymer derivates thereof. Films made from some of these or other materials may be cast with no orientations or may also be oriented in at least one direction to improve dimensional stability. The cast polymer may also be coated (extruded) or otherwise placed on a separate film that has the desired properties or may help to augment the properties on a cast film.

### Monitoring Color Shifts

One well-known problem with LEDs and other types of solid-state light sources relates to spectral stability and accuracy, which can cause some amount of color shifting. An optional color sensor can be provided as a component of one or more of the light film extraction areas. Color sensor can be used in a control loop that compensates for color shifts such as can be due to age, heat, or manufacturing differences between LEDs or other types of light source. Optionally, image data for pixels nearest a particular light pipe can be adjusted to compensate for detected color shifts.

### System Considerations

Using any of a number of devices currently available, light films of the present invention are capable of providing a high level of illumination, at between 2000-6000 nits or higher. At high energy levels, heat buildup can be a problem with LEDs in some applications. Backlight apparatus can provide one or more heat sinks, cooling fans, or other mechanisms to help dissipate excess heat during operation. Advantageously, heat-dissipating components can be positioned along peripheral edges of a display device, away from the LCD panel when using the apparatus and methods of the present invention.

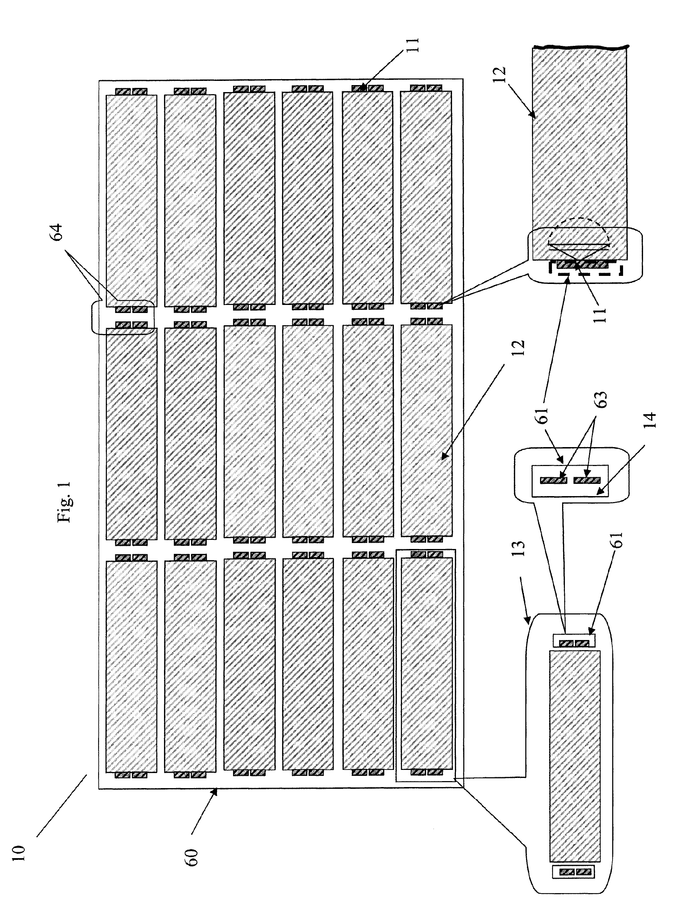

Referring now to the drawings, Figure 1 provides an integrated backlight illumination assembly 10, including a light film 60 having a plurality of light redirecting areas 12. Solid state light sources 11 is provided on light insertion surfaces 14 to form the two dimensional light illumination array 13. The light illumination array 13 is the light redirecting area 12 together with light sources 11 on their light insertion surfaces 14. The LEDs or other light source inserts light within the thickness of the light film. The light redirecting area transfers the point source solid state (e.g., LED) light source into a planar light source. Therefore, a larger area planar light source is created from this two dimensional light redirecting area array with enough number of solid state light source to provide sufficient brightness from the back light. A hole 61 within the light film provides a means to level the light source within the thickness of the light film. The hole also has a light input or light insertion surface 14 that allows the light from the light source to enter the light redirecting area. An optional means of providing two LED's side to side 63 or back-to-back 64 may be configured within the hole to illuminate two different light redirecting areas. While the light redirecting areas are shown to be lit from both ends, an embodiment may provide a light source only on one end or a mixture of one or both ends. Such a configuration provides a means to more uniformly light the display.

Preferably, the film has a bending stiffness between 50 to 1200 millinewtons. More preferably, between 150 to 400 millinewtons. Stiffness below 50 millinewtons is difficult to handle and place into a display. Stiffness above 1200 millinetwons is difficult to bend around rollers required in a roll to roll manufacturing process. The bending stiffness of the film or bar is measured by using the Lorentzen and Wettre stiffness tester, Model 16D. The output from this instrument is force, in millinewtons, required to bend the cantilevered, unclasped end of a sample 20 mm long and 38.1 mm wide at an angle of 15 degrees from the unloaded position

Preferably, for the light guide film, the thickness is between, .1 mm to 1.0 mm. More preferably, the thickness is between .1 mm to .8 mm. The thickness of the film is related to the emitting surface of the desired light source. It is desirable to have the thickness of the film at least match the thickness of the emission surface of the light source and preferably the thickness of the film is approximately twice as thick as the emission surface of the light source. In addition, the light guide film of the present invention has a width to height ratio of between 10/1 to 1000/1.

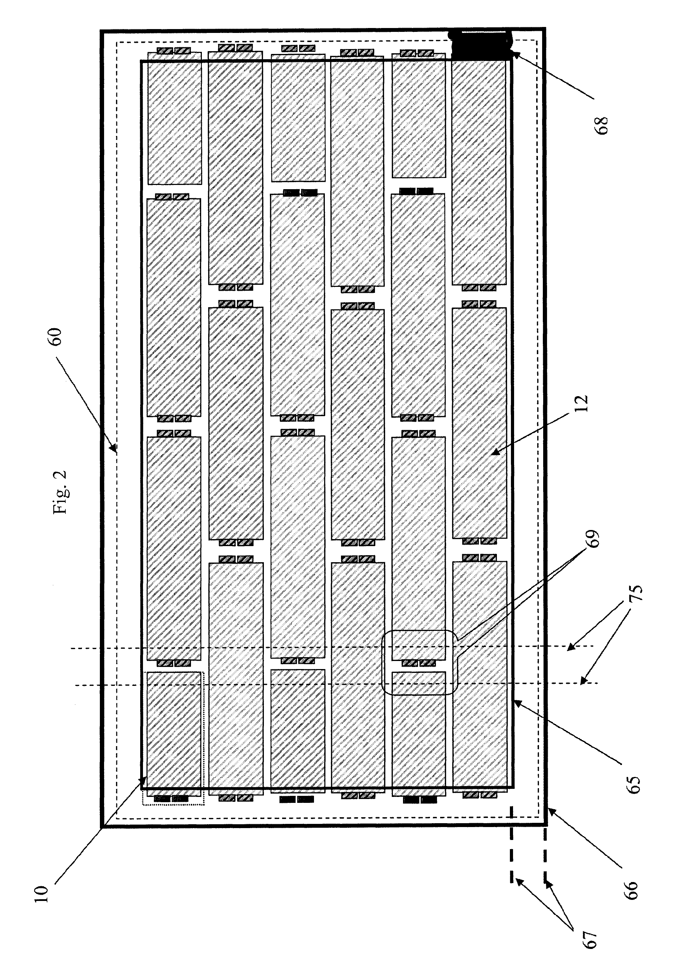

Figure 2 is a topical view of a backlight illumination area 10 with light film 60 (formed by dotted line) with interlaced light redirecting areas 12. Such interlacing or overlap may be in an alternating pattern of some frequency or may be random so as to minimize the number of vertical lines segments 69 (formed by the area where two redirecting areas and any associated LED and empty space between them) within a vertical column. An imaginary vertical column is shown by dotted lines 75. For this figure there are three vertical line segments within this imaginary column. Frame 66 may cover some of the edge light sources. The thickness of the frame is represented by the horizontal dotted lines 67. In a display the frame would be opaque as shown by frame segment 68. The inner wall 65 forms a boundary between the lit view plane of the backlight and the edge of the frame.

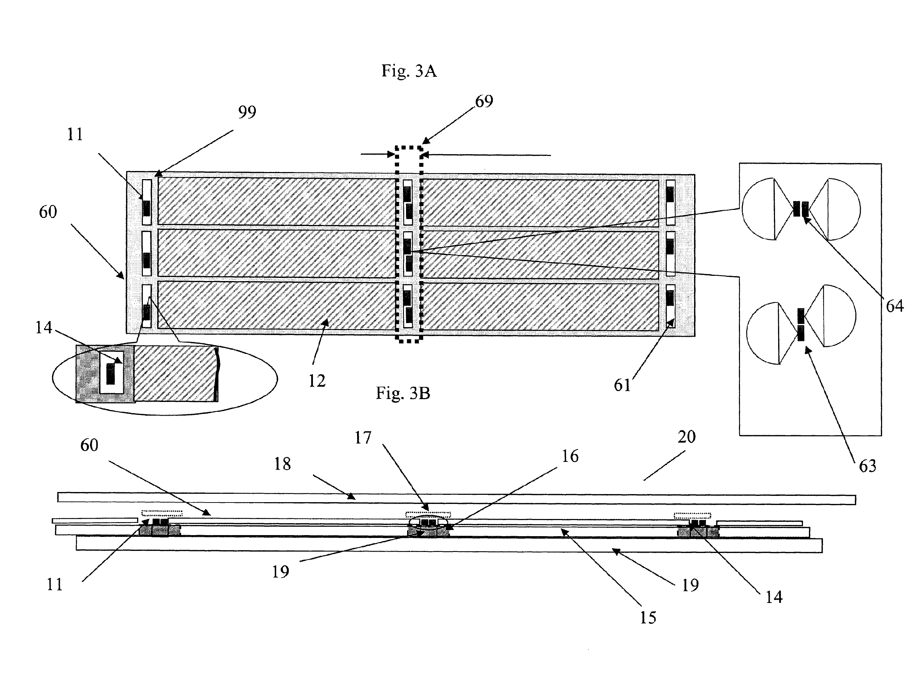

Figures 3A (plan view) and 3B (cross-sectional view) provide a multi-regioned light redirecting film 60 with multiple regions for light redirecting and channeled light input. This figure has the light input portion of the film 14 in the same plane as the light redirecting/emitting part of the film as well as the emission part of the solid state light source. Figure 3B is a cross-sectional view of the light film and some associated parts that form a backlight 20. Light film 60 is a thin flexible transparent web with patterned light redirecting area 12 on top of bottom reflector 15. Light film 60 forms a flat view area of patterned area 12 and hole 61 in light film 60 and hole 16 in the bottom reflector allows solid state light source 11 to emit light into the side of light film 60. By providing a hole in the bottom reflector of the heat sink, drives and other non-light emitting surface may be hidden from view. A thin reflector strip 17 is used to cover the light source (LED) and the hole so it is not visible on the view side of the backlight or display. The thin reflector may be a white diffuser or mirror-like surface. A diffuser 18 is placed over the light film. There may be a small air gap in some embodiments to aid in the relative amount of diffusion, although the small air gap is not necessary for all cases. The diffuser may be a bulk diffuser where the diffusing media is throughout the thickness of the diffuser. The diffuser may be a slab or film. It may be also be an asymmetric in diffusion properties.

It should be noted that the LED drivers, power supply and heat sinks are located below the bottom reflector 15 via a hole in the bottom reflector 16. Additionally there may be a hole or trench 61 in the multi-regioned light film 60. Such a hole or trench may be formed or otherwise punched into the film so as to substantially surround at least the light source emission surface. The hole or trench may be rectangular, square, curved or other geometric shape that helps to optimize the area of the hole as well as to capture and direct as much light into the light-redirecting area as possible. The hole on the film may be a through hole on the film or partway through the film that becomes a cavity on the film. The LEDs 11 may be positioned in an end to end configuration 64 or side-by-side configuration 63 in the region of the film where more than one light-redirecting area is lit. In general the side by side configuration will occupy less lateral space than the end to end (back-to-back) configuration. A single hole or trench may provide light sources that provide light to the light redirecting area to its left and another LED providing light to a redirecting area to the right. Although not shown, the opposing light-redirecting may be so positioned in their vertical placement so as to be centered on the LED. The light redirecting features 12 may be patterned in such a manner as to optically decouple their horizontal sides (or vertical sides if so positioned). A thin reflector strip 17 may be positioned over the LEDs so as to hide them from view. Imaginary vertical line segment 69 may have a distance between light redirecting areas to accommodate the light source and their associated light input surface. The distance may vary from 1 to 10 mm. The configuration shown is best suited from a white light source. Color mixing for RGB LED depends on light coupling surface of film and is best optimized with a color mixing section (not shown in this figure).

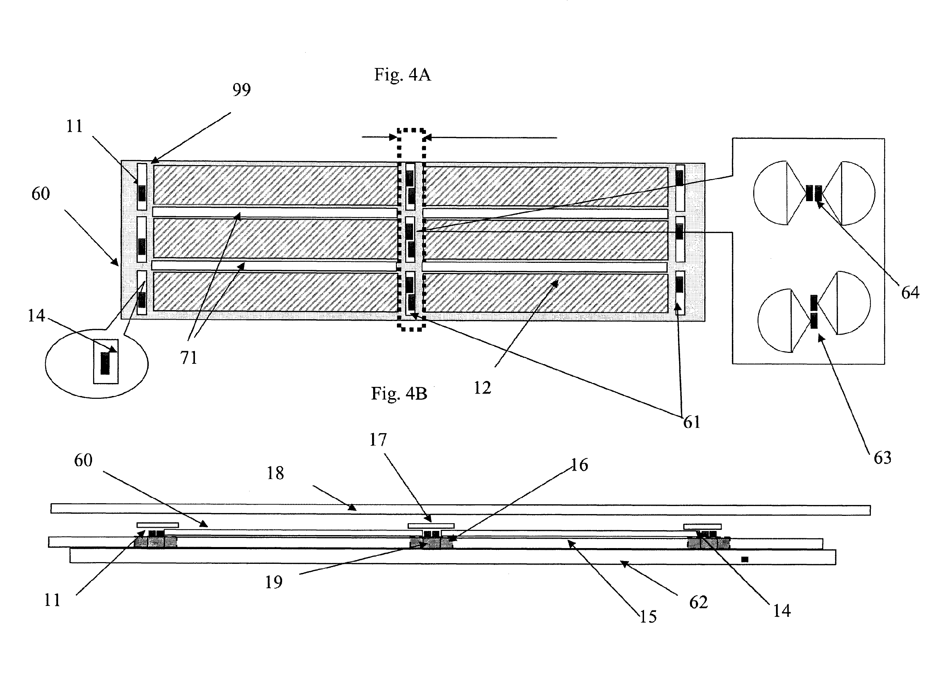

Figures 4A (Plan view) and 4B (cross-sectional view) provide light film 60 with multiple regions for light redirecting and channeled light input. Each region of light redirecting features 12 is separated with a hole that goes through the film or trench (channel) (does not go all the way through the film) 71. The lack of material (air) has a low refractive index and helps to minimize light leakage between light redirecting areas. This figure has the light input portion of the film in the same plane as the light redirecting/emitting past of the film. It should be noted that the LED drivers, power supply and heat sink are located below the bottom reflector via a hole in the bottom reflector 16. Additionally there may be a hole 61 in the multi-channel light film 60.
Such a hole may be formed or otherwise punched into the film so as to substantially surround the light source. The hole may be rectangular, square, curved or other geometric shape that helps to optimize the area of the hole as well as to capture and direct as much light into the light channel as possible. The LEDs 11 may be positioned in an end to end configuration 64 or side-by-side configuration 63 in the region of the film where more than one light channel is lit. In general, the side by side configuration will occupy less lateral space than the end to end configuration. Although not shown in this figure the opposing light channel may be so positioned in their vertical position so as to be centered on the LED. The light redirecting features may be patterned in such a manner as to optically decouple their horizontal sides (or vertical sides if so positioned). A thin reflector strip is positioned over the LEDs so as to hide them from view. Other films may also be used in this embodiment to aid in light diffusion, collimation, light enhancement and or light polarization.

The light film with holes or cavities 61 in which the LED are positioned so the light emission surface of the solid state light source is in the thickness plane of the film together with trenches (channels) or strip shape aperture between light redirection areas provides a film with no crosstalk between each side-by-side adjacent light redirection strip. The advantage of such a film is that it is compatibility with local dynamic dimming (adaptive dimming, active dynamic, High Dynamic Range) backlights, compatibility with color sequential LCD and easy to manufacture. Disadvantages are, less tolerance for LED failure and additional strip opening in manufacture. This embodiments is preferable for white LED or white solid sate light source. If colored LED's are desirable, a color mixing section (not shown in this figure) may be needed.

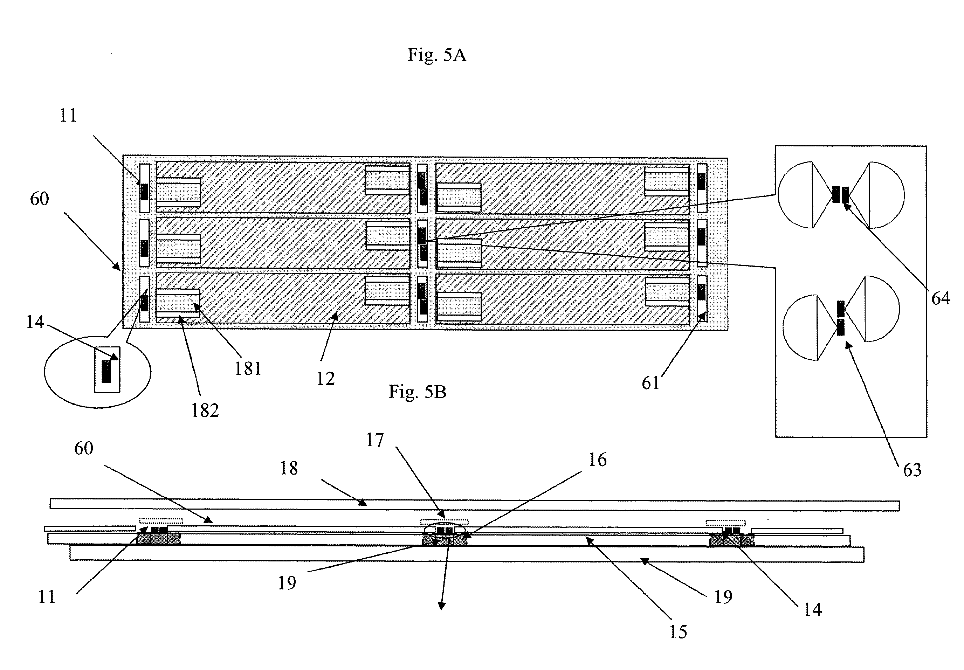

Figures 5A (topographical view) and 5B (cross-sectional view) provide a light film 60 with a color mixing section 181 for RGB LED or other multi-colored solid state light source. There is a color mixing section associated with each light redirection area 12 and or each light source 11. The color mixing section may only be a few millimeters in length or width. The actual dimension may be adjusted to achieve the best color mixing. The color mixing area is free of light redirection features and work most efficiently with trench 182 on the two sides parallel to the incoming light. The amount of color mixing depends on the TIR on the optical surface of the color mixing area 181. A trench 182 separates the color mixing area 181 from the light redirection area 12. Note, the trench 182 may also be a hole that goes through the thickness of the film 60. The trench 182 aids in the TIRing of the light and minimizes light leakage. In addition, it should be noted that the embodiment shown provides a light redirecting region that is lit from both ends. By having the color mixing section offset in their horizontal position within a given light redirecting region, the area either above or below (on the side) is more uniformly lit. The thin reflector strip that covers the seam between horizontally positioned light redirecting areas including the hole and light source, also helps to minimize headlight or bright spots.

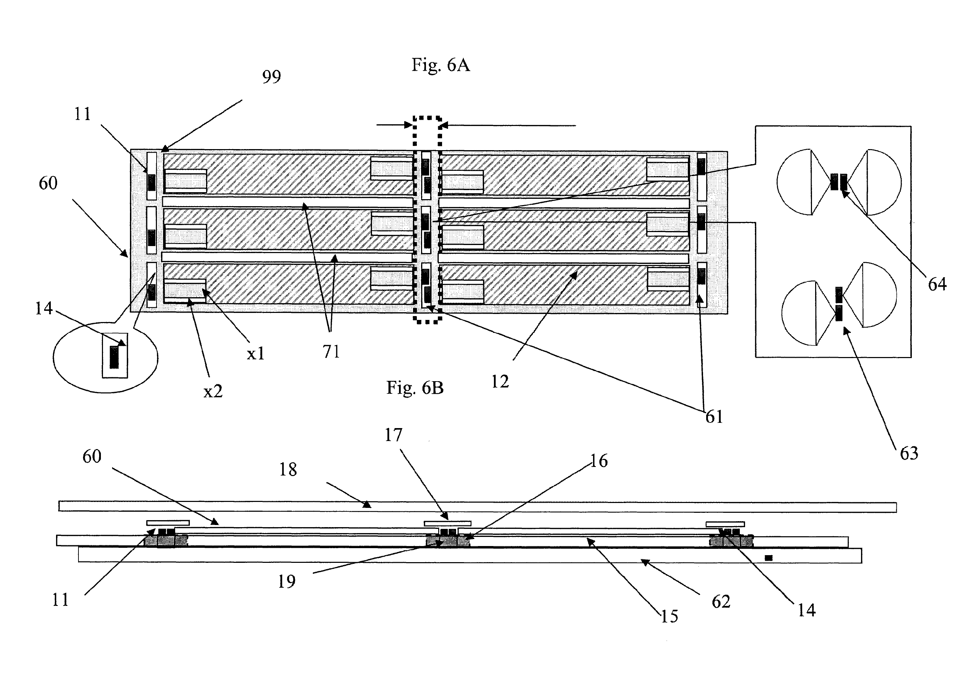

Figures 6A (Plan view) and 6B (cross-sectional view) provide a light film 60 with multiple regions for light redirection with color mixing sections. Each region of light redirecting features 12 is separated with a hole or trench 71. The lack of material (air) has a low refractive index and helps to minimize light leakage between light redirecting areas. This figure has the light input portion of the film in the same plane as the light redirecting/emitting past of the film. It should be noted that the LED drivers, power supply and heat sink are located below the bottom reflector via a hole in the bottom reflector 16. Additionally there may be a hole 61 in the multi-channel light film 60.
Such a hole may be formed or otherwise punched into the film so as to substantially surround the light source. The hole may be rectangular, square, curved or other geometric shape that helps to optimize the area of the hole as well as to capture and direct as much light into the light channel as possible. The LEDs 11 may be positioned end to end configuration 64 or side-by-side configuration 63 in the region of the film where more than one light channel is lit. In general the side by side configuration will occupy less lateral space than the end to end configuration. Although not shown in this figure the opposing light channel may be so positioned in their vertical position so as to be centered on the LED. The light redirecting features may be patterned in such a manner as to optically decouple their horizontal sides (or vertical sides if so positioned). A thin reflector strip is positioned over the LED's so as to hiding them from view. Other films may also be used in this embodiment to aid in light diffusion, collimation, light enhancement and or light polarization.

Entire film with holes or cavities to put LEDs through or fit LEDs in plus strip shape aperture between light extraction area. There is no crosstalk between each side-by-side adjacent light extraction strip. Advantages are compatibility with local dynamic dimming (adaptive dimming, active dynamic, High Dynamic Range) backlight, compatibility with color sequential LCD, and ease of manufacturing. Disadvantages are less tolerance for LED failure and additional strip opening in manufacture. These embodiments are preferable for RGB LED or RGB solid state light sources. The color mixing for RGB LED depends on the TIR on the optical surface of the color mixing area x1. Trench x2 (a hole may interchangeably used) separates the color mixing area x 1 from the light redirection area 12.

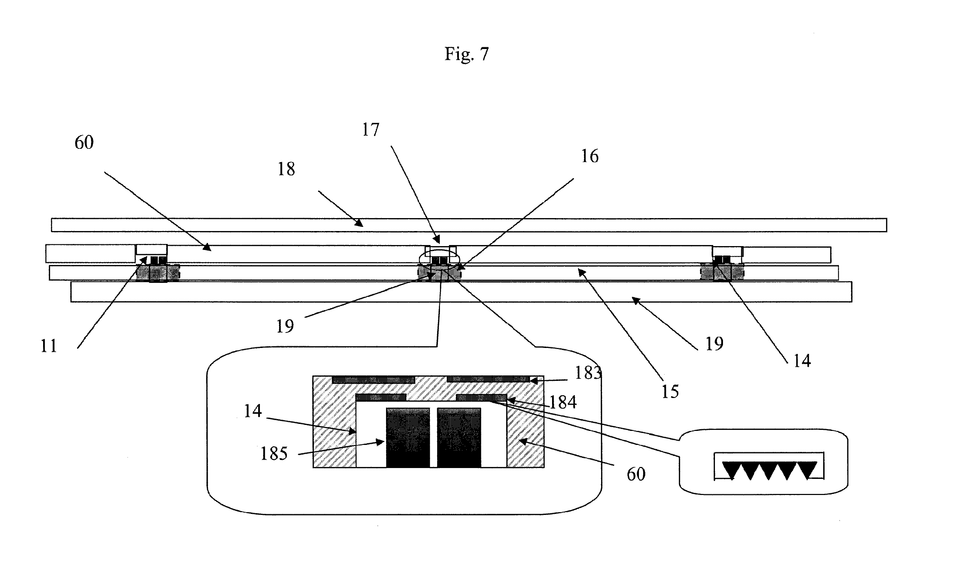

Figure 7 is a cross-sectional view of a backlight embodiment without the thin reflector strip 17 as shown in previous figures. Diffusive light redirecting features 183 and/or 184 may be positioned on the film and in the area on top of the LED over the finite spacing between the LED light emitting surface 185 and the light input surface 14 of the film 60 in order to redirect the uncoupled light, which is not transmitted into the film due to the less than 100% coupling efficiency of the light insertion, to the top of LED so that on top of the LED and on top of the finite spacing between the LED light emitting surface and the light input surface of the film the brightness is close to on top of the light redirecting area 12. While this figure shows the diffuse light redirecting features 183 and 184 to be formed in light film 60, an alternative embodiment is to place a separated patterned film over top of light film 60. This will have a similar effect to the embodiment shown. Other films may also be used in this embodiment to aid in light diffusion 18, collimation, light enhancement and or light polarization.

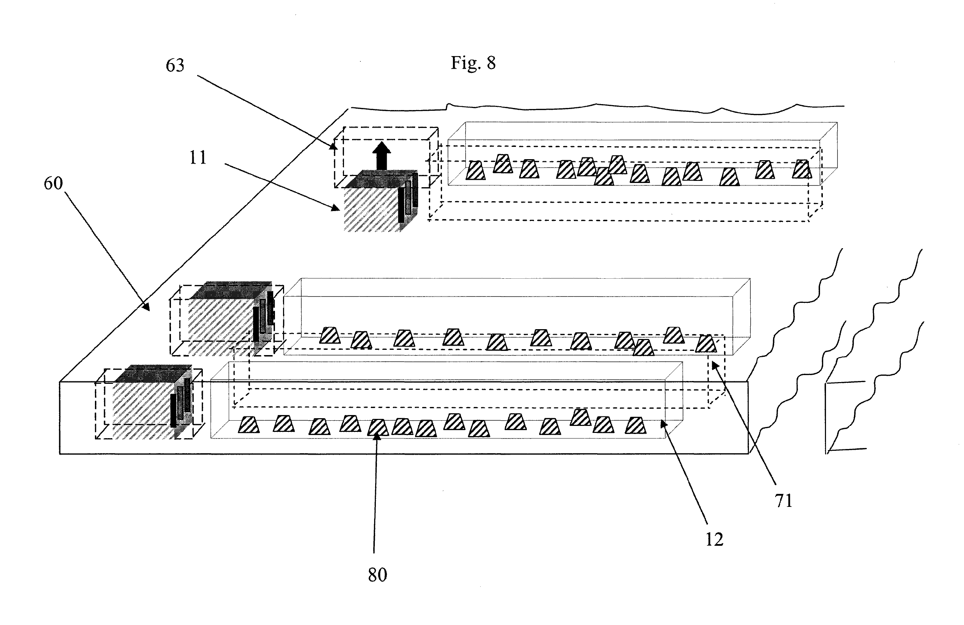

Figure 8 is a perspective cross-sectional view of a portion of a light film 60 with side emitting LED light source 11 that is positioned in hole 63 in the light film. The light film 60 has a light redirecting region 12 that comprises light redirecting features 80. It should be noted that this figure is not to dimension and no conclusion should be assumed based on this drawing. For example the light redirecting region appears as a thick bar where in fact it is a thin film area with redirecting features and the width is wider than its thickness even though it is not shown as such in this figure. This is simply done to provide some additional insight into the light redirecting features. The light redirecting features may vary in their shape, design, packing density, depth and smoothness in order to provide uniform lighting directed towards the view side of a display or backlight. In some embodiments of this invention their may be a thin hole or trench 71 located between light redirecting areas. The hole or trench is intended to provide optical isolation between light redirecting areas. It should also be noted that the hole or trench may be extended to isolate the film region between hole 63 and the light redirecting region 12. By position such a feature around the film area between the hole and the feature, the area may act as a color mixing section so RGB light sources may be used. If the trench or hole 71 is not extended into this region, it may be desirable to use a white light or other source that does not require color mixing. These holes/trenches are located between the light redirecting areas and are very thin. They may vary in their width from a few microns to a few millimeters. The holes provide an area of low refractive index and aids in keeping the light within the redirecting area. In addition the light redirecting region may have a lens feature on the viewer side surface that can be used with or without the light redirecting features.

Figure 8 is a perspective cross-sectional view of a portion of a light film 60 with side emitting LED light source 11 that is positioned in hole 63 in the light film. The light film 60 has a light redirecting region 12 that comprises light redirecting features 80. It should be noted that this figure is not to dimension and no conclusion should be assumed based on this drawing. For example, the light redirecting region appears as a thick bar where in fact it is a thin film area with redirecting features and the width is wider than its thickness even though it is not shown as such in this figure. This is simply done to provide some additional insight into the light redirecting features. The light redirecting features may vary in their shape, design, packing density, depth and smoothness in order to provide uniform lighting directed towards the view side of a display or backlight. In some embodiments of this invention their may be a thin hole or trench 71 located between light redirecting areas. The hole or trench is intended to provide optical isolation between light redirecting areas. It should also be noted that the hole or trench may be extended to isolate the film region between hole 63 and the light redirecting region 12. By position such a feature around the film area between the hole and the feature, the area may act as a color mixing section so RGB light sources may be used. If the trench or hole 71 is not extended into this region, it may be desirable to use a white light or other source that does not require color mixing..These holes/trenches are located between the light redirecting areas and are very thin. They may vary in their width from a few microns to a few millimeters. The holes provide an area of low refractive index and aids in keeping the light within the redirecting area. In addition the light redirecting region may have a lens feature on the viewer side surface that can be used with or without the light redirecting features.

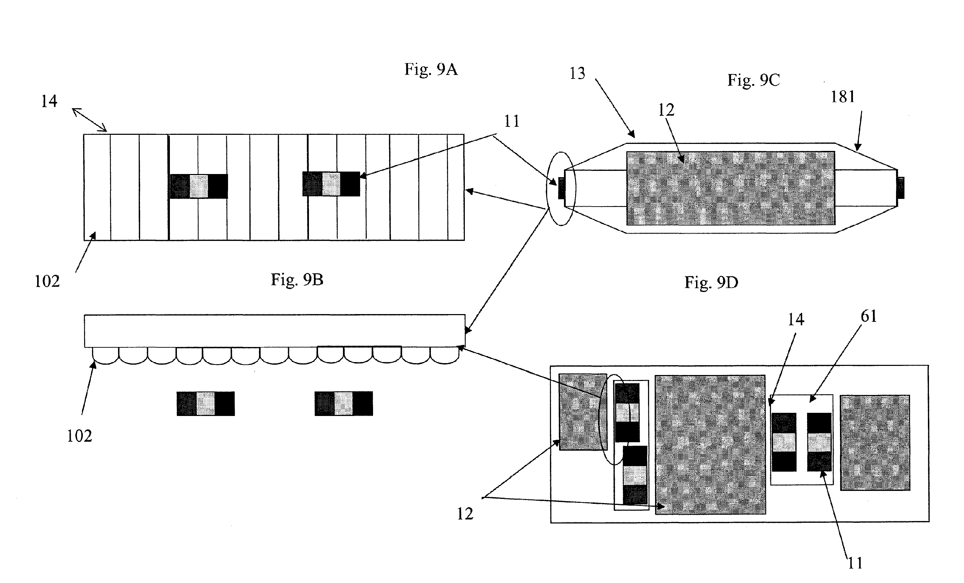

Figure 9A is a front view of the light input and Figure 9B is a top view of the light input surface. The surface provide means for improved light coupling into the light film light entry surface 14 may further be enhanced by their physical design, shape and configuration. This may include but not limited to lenticular structures 102 to reduce head lighting. The lens-like structure provides a means diffuse or spread the light The lens like structure may be used to spread the light after it enters the film in order to increase the covering area and enhance the color mixing of RGB LED or RGB solid state light source.

Figure 9C is a top view of an element of a light redirecting array 13 with tapered light mix section 181 and light input surface with lenticular 14 with an associated solid state light source 11. The tapered color mix section provides a means to spread the light from the LED over a wider footage print and also provides a means form a white illumination by mixing colored LEDs. When used in combination with a structured light input surface (lenticular, prism, channels, individual elements or roughened surface, more light from the light source may be captured and directed into the light redirecting area. For channels or arrays of optical structures, the features may run either horizontally, vertically or a combination of both or pattered in a desired patterned (not shown in the figure).

Figure 9D is a top view of several configurations of LED light sources 11 and their associated light redirecting areas 12 as well as the light input surface with an optical feature 14 that are inserted in the thickness plane of the light film inside hole 61. The advantage of the lens structure is to capture more of the parabolic light as it is emitted from the light source 11. The lens structure also aids in light collimation as it enters the film. This provides a more favorable TIR angle for more of the light to enter the light film. Additionally the light input area of the light film may be anti reflective so as to reduce fernel losses.

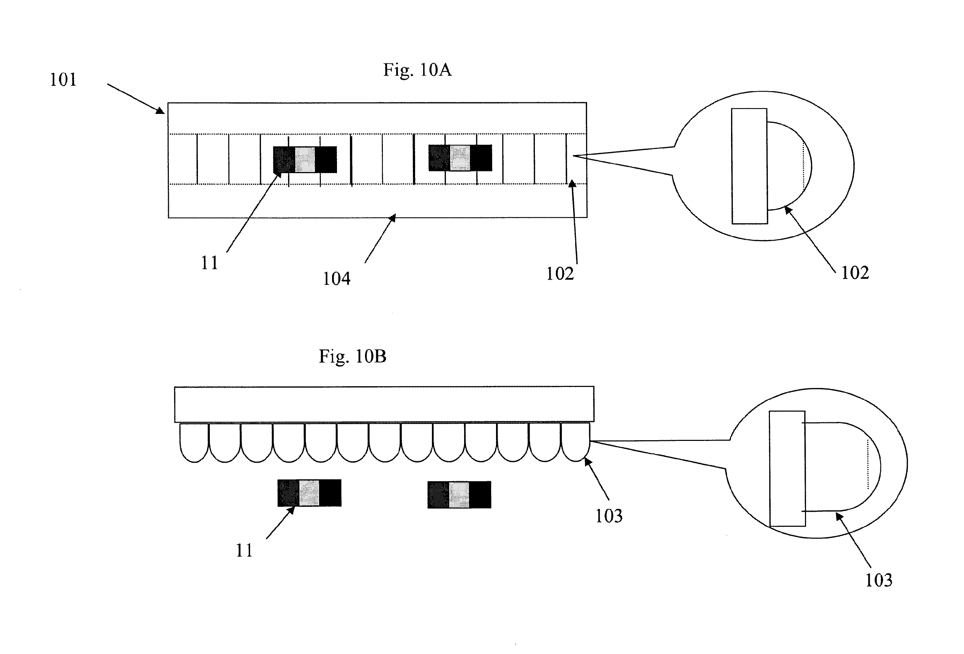

Figure 10A provides a front view of the light source and light entry surface 101 of a light film with solid state light source 11 and lenticular high powered lenslet 102. The blow up section is a side view of one of the lens. The lens shape may be a high powered lens as shown by blowup section of 102. The advantage is to provide the film with reduced head lighting as well as to aid in color mixing. A high powered lens as shown in the top view provides a lens design to reduce light leakage from the top and bottom of the film. The high powered lens provides more collimation of the light that improves the TIR angle and therefore more light is directed into the portion of the film with the light redirecting features. The high powered lens in the vertical provides reduced light leakage from the top and bottom of the film. This embodiment may be used with either an RGB light source or white light source. If an RGB light source is used, it may be preferable to have an additional light mixing section. While this figure provides an embodiment with substantially equal lens across it width, another embodiment would be to vary the lens dimension as a function of the distance from the LED. It my be desirable to have somewhat larger lens out towards the edges or even prism shaped structures in combination with the lenslets to aid in capturing and directing more light at a favorable TIR angle into the film. The lens useful in these embodiments may extend the entire thickness of the light film or only cover a portion of the film thickness. In a further embodiment there may be a partial lens shape that is vertical dimension and another set of larger lens on the top and bottom that runs in the horizontal dimension 104.

Figure 10B provides a top view of the light source and light entry surface 101 of a light film with solid state light source 11 and lenticular over powered lenslet 103. The blowup section shown with Figure 10B is a cross sectional view of an over powered lens. An over powered lens has an elongated body and it helps to reduce head lighting and also provides some color mixing. Additionally, it provides some diffusion in the horizontal direction.

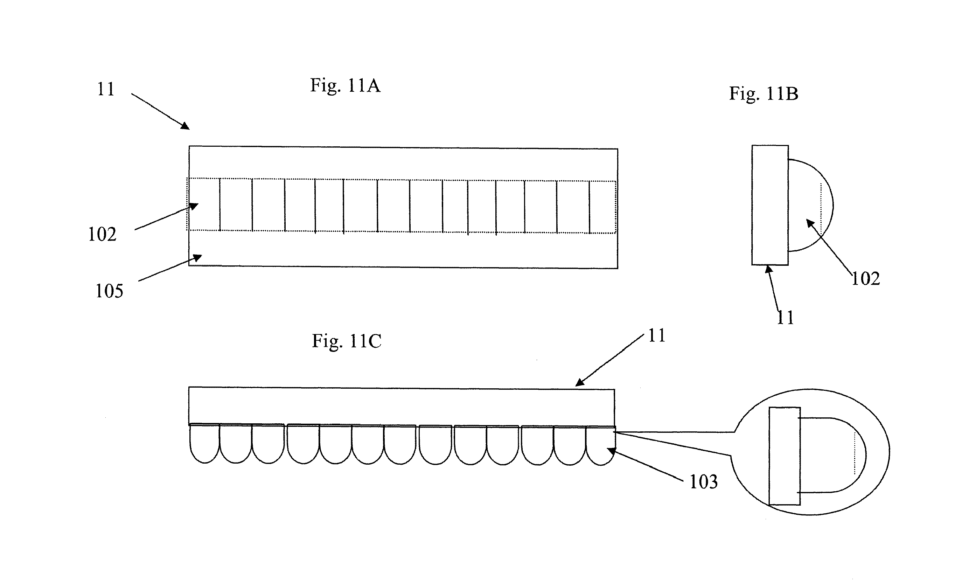

Figures 11A, B and C provides a front view, a side view and a top view, respectively, of an LED light source in which the light emitting surface of the lens has a shaped optical structure. The shape of the LED light output portion may also comprise a lens. Figure 11A provides a front view of the light source of solid state light source 11 and lenticular high powered lenslet 102. The blow up section is a side view of one of the lens. The lens shape may be a high powered lens as shown by blowup section of 102. The advantage is to provide an LED with reduced head lighting as well as to aid in color mixing. A high powered lens as shown in the top view provides a lens design to reduce light leakage from the top and bottom of the film. The high powered lens provides more collimation of the light that improves the TIR angle and therefore more light is directed into the portion of the film with the light redirecting features. The high powered lens in the vertical provides reduced light leakage from the top and bottom of the film.
Figure 11B provides a side view of the LED and the light emission side lens. This embodiment may be used with either an RGB light source or white light source. If an RGB light source is used, it is preferable to have an additional light mixing section.
Figure 11C provides a top view of the light source 11 and lenticular over powered lenslet 103. The blowup section shown is a cross sectional view of an over powered lens. An over powered lens has an elongated body and it helps to reduce head lighting and also provides some color mixing. Additionally, it provides some diffusion in the horizontal direction.

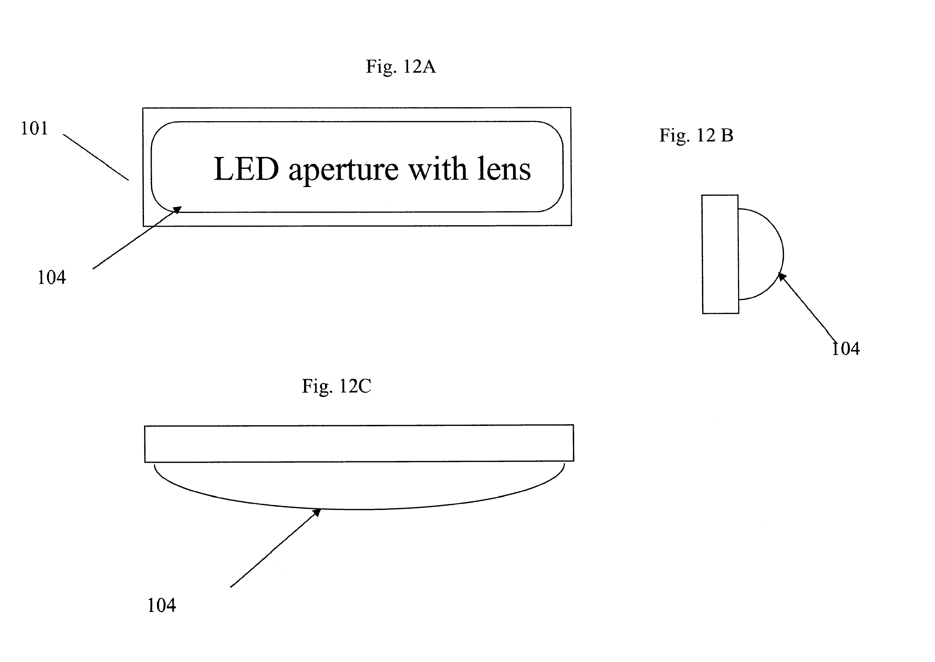

Another lens configuration is shown in Figures 12A, B and C. Figure 12A provides a front view of light entry surface 101 of a light film with lenticular low powered lenslet 104. This embodiment may be used with a solid state light source and preferable a white LED. This lens shape has a varying high powered design in the vertical dimension as shown in cross section of Figure 12B to reduce light leakage from the top and bottom of the film. In the horizontal dimension the lens design is low power to reduce head lighting it also provides less collimation the vertical dimension.

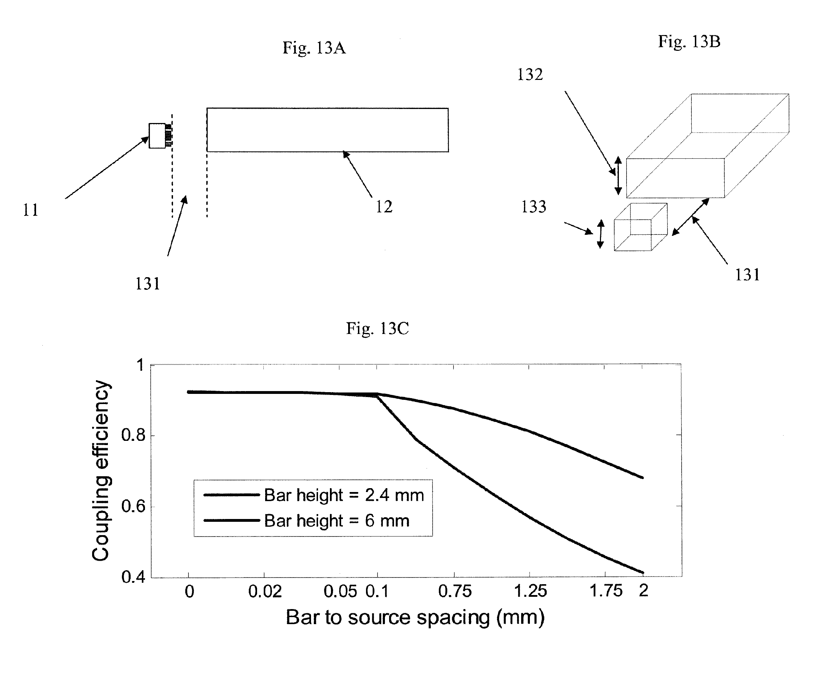

Figure 13A is a cross sectional view of light redirecting area 12 with solid state light source 11. The dotted lines provide a representation of the distance 131 between the light source emitting surface and the light input surface of the light redirecting area. The light redirecting area is a thin film of the present invention. It is desirable to provide as close spacing as possible to maximize the overall efficiency of the light entering the redirecting area. The thickness of the light redirecting area is also important. Figure 13B is a perspective view indicating that typically the thicker the light redirecting area 132 is in relationship to the thickness of the light source 133, the better the coupling efficiency. Thicker light redirecting areas provide for slightly longer distances 131 than thinner light redirecting areas to achieve the same light input efficiency. It is desirable to have a distance of between 0.01 to1 mm for thin light films. Figure 13C provides a graph showing the importance of the need for close positioning of the light source surface to the light entry surface of the light redirecting area.

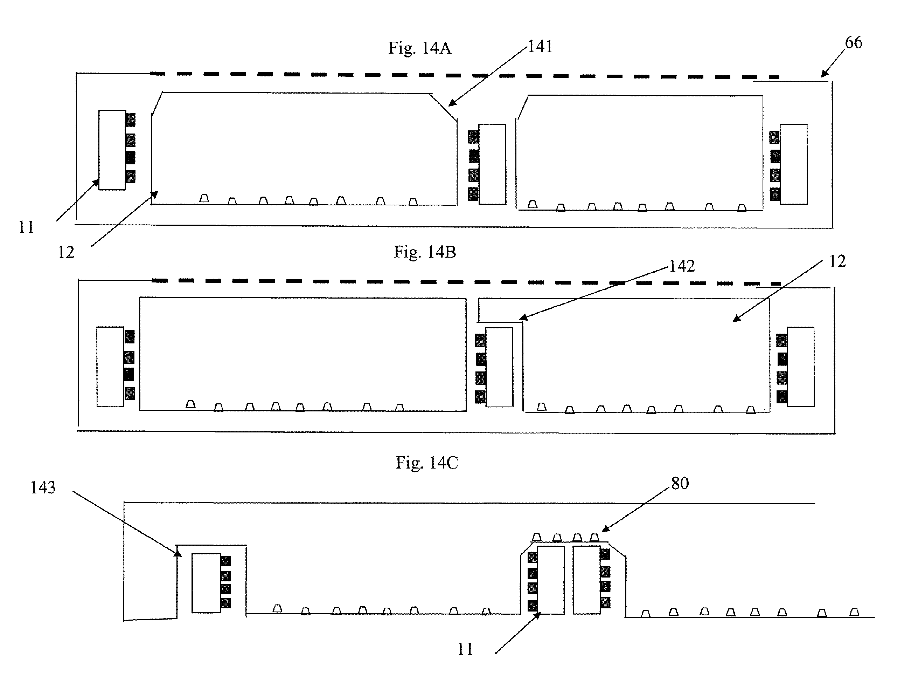

Figures 14A, B and C provide a cross sectional views of other embodiment of this invention. Figure 14A is a light redirecting area 12 within a light film in which the top ends are beveled or chamfered edge 141 to aid in the spread of light to help mask or hide the solid state light 11. There are two embodiments shown, one with bevels on each end for a light redirecting area that is lit from both ends. For a light redirecting area that is only lit from one end there may be one bevel to help spread light over an adjacent solid state light source. The frame 66 would hide an edge LED and it associated heat sink and drivers. It should be noted that the relative dimensions shown are in these figures is not correct and therefore no conclusions should be drawn based on the relative scale of the figures.

Figure 14B is a cross sectional view of a light film where the LED is positioned under recessed 142 of the light redirecting area 12. This area helps to hide the LED because the light intensity is partly directed over top of the LED. Additionally, the edges may be beveled (not shown) to provides improved light uniformity. It should be noted that the light redirecting areas are not necessarily drawn to scale. The relative thickness is much smaller and the length is longer. It should also be noted that the number of light redirecting areas across the display may also be much greater. Figure 14C is a cross section view of another embodiment in which pockets or recesses have been formed in the light film from the bottom leaving a portion of the film that bridges the light source. The recessed areas may have substantially square corners or they may be rounded or chamfered. There may also be optical features 80 over top of the LED 11 within the recessed area. The optical feature may have a variety of shapes and they may be holes, formed features or structures such as prisms, lens or other complex shape. The features may be individual structures or they may form channels. The feature density (number of) may vary as a function of the distance from the light source. Typically there is a higher density of features as the distance from the light source increases. The desire is to provide uniform illumination over the surface of the display or backlight.

## Claims

1. An integrated backlight illumination assembly for an LCD display comprising:
a substrate for providing structural and functional support to the assembly;
a bottom reflector provided on the substrate;
a plurality of solid state light sources provided in an opening of the bottom reflector for providing a point light source;
a plurality of light films and having light redirecting areas provided between the plurality of solid state light sources for redirecting and spreading the point light source to a uniform plane of light;
a top diffuser for diffusing the uniform plane of light; and
wherein the plurality of light films has a thickness between .1 mm to 1.0 mm and a bending stiffness between 50 to 1200 millinewtons.

2. The backlight illumination assembly of claim 1 wherein the thickness of the plurality of light films is between 100 microns to 1 mm.

3. The backlight illumination assembly of claim 1 wherein a reflector strip is provided over the plurality of solid state light sources to reduce the visibility of the light sources from a viewing side of the LCD display.

4. The backlight illumination assembly of claim 1 wherein the plurality of solid state light sources are arranged in a side by side configuration.

5. The backlight illumination assembly of claim 1 wherein the plurality of solid state light sources are arranged in a end to end configuration.

6. The backlight illumination assembly of claim 1 wherein the light film further comprises light redirecting features provided in the light redirecting areas.

7. The backlight illumination assembly of claim 1 wherein an end of the light redirecting area has a chamfered edge to aid in the spread of the point light source.

8. The backlight illumination assembly of claim 1 further comprising a trench provided between the light redirecting areas to reduce light leakage between the light redirecting areas.

9. An integrated backlight illumination assembly for an LCD display comprising:
a substrate for providing structural and functional support to the assembly;
a bottom reflector provided on the substrate;
a plurality of multi-colored solid state light sources provided in an opening of the bottom reflector for providing a point light source;
a plurality of light films having light redirecting areas provided between the plurality of solid state light sources for redirecting and spreading the point light source to a uniform plane of light;
a plurality of color mixing sections provided in the light redirecting areas for providing improved color uniformity from the multi-colored solid state light sources;
a top diffuser for diffusing the uniform plane of light; and
wherein the plurality of light films has a thickness between .1 mm to 1.0 mm and a bending stiffness between 50 to 1200 millinewtons.

10. The backlight illumination assembly of claim 9 further comprising a trench provided between the light redirecting areas to reduce light leakage between the light redirecting areas.
